Europäisches Patentamt

European Patent Office

Office européen des brevets

(11) Veröffentlichungsnummer: **0 320 490**
A2

## (12) EUROPÄISCHE PATENTANMELDUNG

(21) Anmeldenummer: 89100269.3

(22) Anmeldetag: 27.05.86

(51) Int. Cl.⁴: **F 16 K 1/24**

(30) Priorität: 30.05.85 DE 3519375
05.10.85 DE 3535637
28.02.86 DE 3606509

(43) Veröffentlichungstag der Anmeldung:
14.06.89 Patentblatt 89/24

(84) Benannte Vertragsstaaten:
AT BE CH DE FR GB IT LI LU NL SE

(60) Veröffentlichungsnummer der früheren Anmeldung nach
Art. 61 EPÜ: 0 224 516

(71) Anmelder: SCHMIDT, Fritz
Im Höltken 13
D-4270 Dorsten 12 (DE)

(72) Erfinder: SCHMIDT, Fritz
Im Höltken 13
D-4270 Dorsten 12 (DE)

(74) Vertreter: Herrmann-Trentepohl, Werner, Dipl.-Ing. et al
Schaeferstrasse 18
D-4690 Herne 1 (DE)

(54) **Absperrorgan.**

(57) Bei einem Absperrorgan mit einem in eine Rohrleitung
einbaubaren Rohrgehäuse und einer Drehklappe, für die eine
das Gehäuse durchsetzende Antriebswelle und ein Sitz im
Gehäuse vorgesehen ist, wobei auf der Antriebswelle (10) eine
Ringscheibe (11) mit Loslagern (7, 8) angeordnet und die
Ventilklappe (3) in der Ringscheibe (4) geführt, sowie mit der
Antriebswelle durch ein Getriebe (22, (23) verbunden ist,
welches beim Einschwenken der Ventilklappe (3) gehemmt ist
und zum Anpressen der Ventilklappe (3) auf ihren Sitz (32)
dient, wobei das Getriebe (22, 23) bei Rückdrehung der
Antriebswelle (10) die Ventilklappe (3) axial vom Sitz (2) abhebt,
bis diese auf der Ringscheibe (4) abgestützt ist und das
Getriebe (22, 23) die Verbindung der Ventilklappe (3) mit der
Antriebswelle bildet, wobei sich die Ventilklappe (3) auf der
Ringscheibe (11) abstützt, welche einen rückwärtigen, als
Antrieb des Getriebes (22, 23) dienenden Klappenansatz
aufnimmt, ist erfindungsgemäß vorgesehen, daß der Klappenansatz (66) mit einem Ventilteller (69) eines Hilfsventils
verbunden ist und ein in einem zentralen Durchbruch (67) der
Ventilklappe (57) begrenzt verschiebbares Schließstück (68)
aufweist, und daß die Ventil klappe (57) einen oder mehrere sie
durchsetzende dungen der Ventilteller überdeckt, der mit der
Antriebswelle (63) mit der Ventilklappe (57) verspannbar ist.

FIG. 1

Bundesdruckerei Berlin

**Beschreibung**

Die Erfindung betrifft ein Absperrorgan für Rohrleitungen gemäß dem Oberbegriff des Patentanspruchs 1.

Das erfindungsgemäße Absperrorgan unterscheidet sich von einfachen Ventilklappen, die bezüglich der Antriebswelle einen zweiarmigen Hebel darstellen und mit beiden Klappenhälften - in axialer Richtung betrachtet -von verschiedenen Seiten her auf dem gehäuseseitigen Sitz schwenken. Diese bekannten Ventilklappen erzwingen eine kugelige Kontur der klappenseitigen und gehäuseseitigen Dichtflächen, die deswegen genau aufeinander angepaßt sein müssen. Der dichte Klappensitz muß wegen der Druckdifferenzen im Rohrgehäuse zwischen der Ventilklappe und ihrem gehäuseseitigen Sitz eine Preßpassung aufweisen. Beim Öffnen oder Schließen der Ventilklappe wird dadurch ein hohes Antriebsmoment erforderlich. Aufgrund der Reibung zwischen der Ventilklappe und dem Gehäuse tritt insbesondere bei abrasiven Durchflußmedien ein sehr starker Verschleiß an den Dichtflächen auf. Dieser führt zunächst zum Nachlassen der Dichtigkeit. Daher muß das gesamte Absperrorgan häufiger ausgewechselt werden.

Bei dem erfindungsgemäßen Absperrorgan bleibt dagegen auch über längere Zeiträume und häufiger Betätigung die Dichtwirkung erhalten. Beim Öffnen und Schließen der Klappe ergibt sich außerdem ein geringes Antriebsmoment.

Die Erfindung geht von einem vorbekannten Absperrorgan aus (DE-OS 31 43 843). Hierbei kann die Ventilklappe aus der Durchflußstellung zunächst ohne Berührung mit dem Gehäuse vollständig in eine Stellung senkrecht zur Durchflußachse geschwenkt werden, so daß das Antriebsmoment lediglich die Strömungskräfte des Durchflußmediums zu überwinden hat.

Die Ventilklappe wird mit einem nur in einer Richtung und daher einseitig wirkenden Getriebe zwischen Antriebswelle und Ventilklappe auf den Gehäusesitz gepreßt. Dadurch entfällt eine reibende Beanspruchung ihrer Kanten. Nachteilig wirkt sich jedoch aus, daß die lose auf der Antriebswelle gelagerte Ringscheibe mit Tellerfedern von der Ventilklappe abgedrückt werden muß, um den Eingriff eines Getriebenockens der Antriebswelle beim gemeinsamen Schwenken von Ringscheibe und Ventilklappe auf den Gehäusesitz bzw. einen gehäusefesten Ringscheibenanschlag zu sichern. Hierdurch wird nämlich einerseits durch die hohen Reibungskräfte des Getriebes die Einleitung der Axialbewegung der Ventilklappe in Richtung auf den Gehäusesitz erheblich erschwert. Andererseits aber kann die Ventilklappe von ihrem Gehäusesitz nur durch die Kraft der hierbei zusammengedrückten Tellerfedern abgehoben werden, nachdem durch Rückdrehen der Antriebswelle der Getriebenocken die Ventilklappe freigegeben hat. Wirkt auf die gleiche Seite der Ventilklappe der hohe Absperrdruck des Absperrorganes, so reicht in der Regel die nicht beliebig zu verstärkende Federkraft für das Abheben nicht aus.

Der Erfindung liegt die Aufgabe zugrunde, eine unabhängig von der Richtung des auf die in der Absperrstellung befindlichen Ventilplatte wirkenden Druckes in der Rohrleitung von ihrem Sitz abhebbare Ventilklappe in dem als bekannt vorausgesetzten Absperrorgan zu schaffen, daß es auch bei extrem hohen Mediendrücken einsetzbar ist, seine Dichtwirkung temperaturunabhängig behält und mit verhältnismäßig geringem Kraftaufwand betätigt werden kann. Diese Aufgabe löst die Erfindung mit den Merkmalen des Patentanspruchs 1. Zweckmäßige Ausführungsformen der Erfindung sind Gegenstand der Unteransprüche.

Diese Aufgabe löst die Erfindung mit den Merkmalen des Patentanspruches 1. Zweckmäßige Ausführungsformen der Erfindung sind Gegenstand der Unteransprüche.

Gemäß der Erfindung wirkt das zwischen Antriebswelle und Ventilklappe eingebaute Getriebe in beiden axialen Richtungen zwangsweise. Infolgedessen sind Federn zum Abheben der Ventilklappe vom gehäusefesten Sitz nicht erforderlich. Dieses Getriebe bildet erfindungsgemäß die einzige Verbindung der Ventilklappe mit der Antriebswelle. Dadurch ist es möglich, das Getriebe leicht-gängig auszuführen, weil die Kräfte, welche die Ringscheibe und die Ventilklappe beim Schwenken zusammenhalten, nicht über die Getriebeglieder übertragen werden. Das gemeinsame Schwenken von Ringscheibe und Ventilklappe reichen im allgemeinen die Kräfte eines selbsthemmenden Getriebes aus, um hierbei die Trennung von Ringscheibe und Ventilklappe zu verhindern. Da diese beiden Bauteile aufeinander abgestützt sind, braucht die Ventilklappe auch nicht mehr auf der Welle gelagert zu werden.

Die Erfindung hat den Vorteil, daß die Ventilklappe einen verhältnismäßig langen axialen Weg durchlaufen kann, was auf ihrer unmittelbaren Verbindung mit dem Getriebe und darauf beruht, daß sie darüberhinaus nicht mehr mit der Antriebswelle verbunden ist. Die Axialbewegung ist daher auch geradlinig. Folglich wird die Ventilklappe nicht mehr in den Sitz eingeschwenkt, sondern vielmehr auf diesen gepreßt. Einfache Sitzflächen können deshalb konische bzw. kegelige Dichtflächen ersetzen. Der Verschleiß der Dichtflächen ist deswegen erheblich gemindert. Nach längeren Einsatzdauern auftretende Verschleißerscheinungen können mit einer leichten zusätzlichen Axialbewegung der Ventilklappe ausgeglichen werden. Das erfindungsgemäße Absperrorgan hat den Vorteil, daß es auch bei extrem hohen Mediendrücken einsetzbar ist, seine Dichtwirkung temperaturunabhängig behält und mit verhältnismäßig geringem Kraftaufwand betätigt werden kann. Mit dem vor dem Öffnen der Ventilklappe geöffneten Hilfsventil wird eine Druckentlastung herbeigeführt. Durch die unmittelbare Führung des Schließstückes in der Absperrklappe und durch die axiale Anpressung des Klappenventiltellers auf die rückwärtigen Kanalmündungen wird eine verhältnismäßig leichtgängige Betätigung des Hilfsventils und der Ventilklappe erreicht, wobei außerdem mit dem Hilfsventil eine praktisch unabhängige Dichtwirkung erzielt wird.

Mit den Merkmalen des Patentanspruchs 2 wird das Hilfsventil selbsttätig geschlossen, sobald die Ventilklappe auf ihren Sitz aufgelegt wird. Mit den Merkmalen des Patentanspruchs 3 werden hinreichend starke Federwirkungen erzielt, die mit Ausnahme des Einleitens der Öffnungsbewegung der Ventilklappe das Schließstück mit seinem Ventilteller stets in fester Anlage an die Ventilklappe halten, so daß die Teile des Hilfsventils alle Drehbewegungen und axialen Bewegungen der Ventilklappe gleichzeitig ausführen.

Bei der Ausführungsform der Erfindung nach dem Patentanspruch 4 läßt sich der freie Querschnitt des Hilfsventiles wählen und auf verhältnismäßig kleiner Ventilklappenfläche unterbringen.

Die Ausführungsform der Erfindung nach dem Patentanspruch 5 schließt an die Anordnung des Klappengetriebes an, welche ein Ritzel als Mitnehmer und einen als Zahnstange ausgebildeten Klappenansatz aufweist. Bei dieser Ausführungsform ergibt sich einerseits eine symmetrische Belastung von Hilfsventil und Ventilklappe, andererseits aber ein kurzer Hebelarm zwischen Antriebswelle und Zahnstange, d.h. ein geringer Durchmesser des Ritzels, wodurch mit verhältnismäßig geringem Aufwand das Öffnen und Schließen der Ventilklappe ausführbar ist. Alle Bewegungsabläufe der Ventilklappe und des Hilfsventil werden ausschließlich über die Antriebswelle eingeleitet.

Wenn man die Ausführungsform nach Anspruch 6 verwirklicht, ergibt sich der Vorteil, daß der Ventilteller in seiner Lage durch eine Führung in der Ventilklappe gesichert ist.

Die Ausführungsform der Erfindung nach Anspruch 7 sorgt für eine leichtgängige Verschiebungsmöglichkeit des Hilfsventils.

Die Erfindung wird im folgenden anhand von Zeichnungen dargestellt und näher erläutert. Es zeigen

Fig. 1 in Stirnansicht eine erste Ausführungsform des erfindungsgemäßen Absperrorgans, das im Bereich der Antriebswelle im Schnitt dargestellt ist,

Fig. 2 das Absperrorgan in einer Zwischenstellung vor Beginn der axialen Schließbewegung längs der Linie II-II der Fig. 1,

Figur 3 das Absperrorgan in vollständig geöffnetem Zustand in der Figur 2 entsprechender Darstellung,

Figur 4 das Absperrorgan nach Anlegen der Ventilklappe an den gehäuseseitigen Sitz in den Figuren 2 und 3 entsprechender Darstellung,

Figur 5 eine zweite Ausführungsform des erfindungsgemäßen Absperrorgans in der Figur 2 entsprechender Darstellung,

Figur 6 a und b zwei weiter abgeänderte Ausführungsformen des Absperrorgans in einer der Figur 4 entsprechenden Darstellung,

Figur 7 im Längsmittelschnitt das Absperrorgan gemäß der Erfindung in vollständig geöffnetem Zustand und in einer weiteren Ausführungsform,

Figur 8 das Absperrorgan nach Figur 7 in einer Vor-Absperrstellung,

Figur 9 das Absperrorgan nach den Figuren 7 und 8 bei geschlossener Ventilklappe,

Figur 10 das Absperrorgan nach den Figuren 7 bis 9 zu Beginn eines Öffnungsvorganges,

Figur 11 eine Einzelheit der Vorderseite der Ventilklappe gemäß dem Pfeil XI in Figur 10,

Figur 12 ein Absperrorgan gemäß einer anderen Ausführungsform der Erfindung in vollständig geöffneter Stellung,

Figur 13 das Absperrorgan gemäß Figur 12 in Vor-Absperrstellung,

Figur 14 das Absperrorgan gemäß den Figuren 12 und 13 in vollständig geschlossener Stellung,

Figur 15 das Absperrorgan im Schnitt längs der Linie XV/XV der Figur 13,

Figur 16 ein Absperrorgan mit einem Gewicht als Kraftspeicher in der Figur 13 entsprechender Darstellung,

Figur 17 ein Absperrorgan mit einer Feder als Kraftspeicher in einer der Figur 13 entsprechenden Wiedergabe,

figur 18 ein Absperrorgan mit einer Rastvorrichtung für eine Führungsscheibe,

Figur 19 ein Absperrorgan in abgeänderter Ausführungsform mit Rastvorrichtung,

Figur 20 einen Querschnitt, der durch eine andere Ausführungsform des Absperrorgans, nämlich durch das Absperrgehäuse und durch die Antriebswelle geführt ist,

Figur 21 eine Ansicht des Gegenstandes der Figur 20,

Figur 22 eine teilweise im Schnitt gehaltene Stirnansicht der axialen Führung in dem erfindungsgemäßen Absperrorgan längs der Linie XXII/XXII der Figur 21,

Figur 23 eine abgeänderte Ausführungsform in der Figur 20 entsprechender, jedoch um einen Halbkreis versetzter Darstellung,

Figur 24 in der Figur 21 entsprechender Darstellung den Gegenstand der Figur 23,

Figur 25 eine teilweise im Schnitt gehaltene Stirnansicht einer weiteren Ausführungsform des erfindungsgemäßen Absperrorgans und

Figur 26 einen abgebrochenen Längsschnitt durch den Gegenstand der Figur 25.

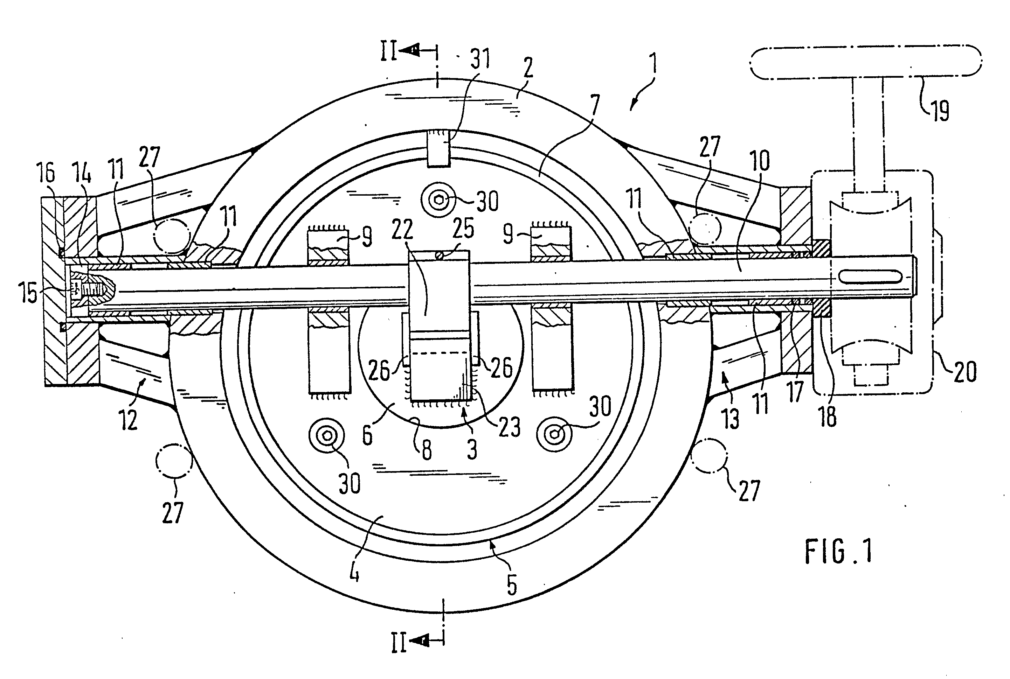

Die Figuren 1 bis 4 zeigen ein in beiden Richtungen gegen Mediumdruck abdichtendes Absperrorgan (1) mit einem rohrförmigen Gehäuse (2) und mit einer Ventilklappe (3), welche in einer Ringscheibe (4) axial verschiebbar geführt ist. Die Führung erfolgt dabei über einen zylindrischen Ansatz (6) der Ventilklappe (3), der in die Öffnung (8) in der Mitte der Ringscheibe (4) eingreift und über einen einseitigen Außenflansch (7) der Ventilklappe (3) die Ringscheibe (4) umfaßt.

Die Ringscheibe (4) sitzt mit zwei rückseitigen Loslagern (9) auf einer Antriebswelle (10), welche das Gehäuse (2) quer durchsetzt und doppelt exzentrisch, d.h. außerhalb der Längs- und Querachse der Ventilklappe (3) verläuft. Sie ist in Lagerbüchsen (11) in seitlichen Gehäusevorsprüngen (12, 13) drehbar und fest in dem Gehäuse (2) gelagert. Eine Längsjustierung der Welle (10) ist über ein Justierstück (14) mit Imbusschraube (15) möglich. Die Abdichtung nach außen erfolgt mit mehreren Dichtringen (16 bis 18).

Die Antriebswelle (10) wird mit einem strichpunktiert dargestellten Handrad (19) stufenlos gedreht. Sie bildet den Eingang eines ebenfalls strichpunktiert angedeuteten Schneckenradgetriebes (20) mit Selbsthemmung.

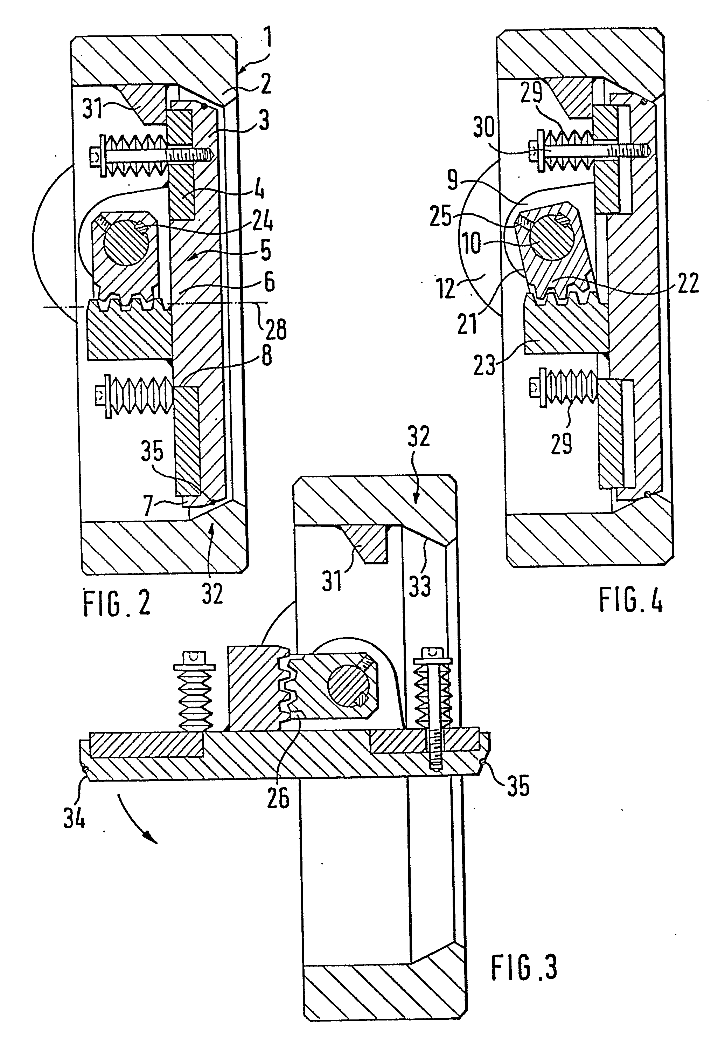

Im Gehäuseinneren sitzt ein selbsthemmendes Getriebe (21), mit dem die Ventilklappe (3) unter Führung durch die Ringscheibe (4) verschiebbar gelagert ist. Das Getriebe weist einen radial zur Antriebswelle (10) stehenden Mitnehmer auf, der auf einen Klappenansatz (23) wirkt. Dieser durchsetzt die Öffnung (8) der Ringscheibe (4). Gemäß dem Ausführungsbeispiel nach den Figuren 1 und 2 ist der Klappenansatz (23) an die Klappe (3) als angeschweißte Zahnstange ausgeführt. Der Mitnehmer (22) ist ein Ritzel, welches mittels einer Paßfeder (24) und einer Feststellschraube (25) drehfest auf der Welle (10) sitzt. Zur Verbesserung der Führung weist der Mitnehmer (22) zwei den Ansatz (23) seitlich einschließende, angeschraubte Wangen (26) auf.

Das Absperrorgan (1) wird an Rohrflansche mit Hilfe von Spannschrauben (27) angeflanscht.

Die Wirkungsweise ist in den Figuren 2 bis 4 dargestellt, welche verschiedene Stellungen der Ventilklappe (3) wiedergeben. Figur 3 zeigt die Offenstellung, in der die Ventilklappe (3) parallel zur Durchflußachse (28) steht und den Innenquerschnitt des Gehäuses (2) freigibt. In dieser Stellung liegen die Ventilklappe (3) und die Ringscheibe (4) unmittelbar aufeinander. Dadurch ergibt sich eine strömungsgünstige Form. In dieser Stellung werden die Ringscheibe (4) und die Ventilklappe (3) mit Rückstellfedern (29) zusammengehalten, welche Tellerfedern sind. Diese umgeben in die Rückseite der Ventilklappe (3) eingeschraubte Bolzenschrauben (30), welche die Ringscheibe mit Spiel durchsetzen. Ist wie dargestellt eine horizontale Anordnung der Antriebswelle oberhalb der Durchflußachse (28) gewählt, so ist auch ohne die Rückstellfedern (29) der Zusammenhalt der Ringscheibe und der Ventilklappe gewährleistet, weil sich die auf der Welle (10) frei drehbare Ringscheibe (4) durch ihr Eigengewicht auf der Ventilklappe (3) abstützt, die ihrerseits durch den Ansatz (23) und die getriebliche Verbindung des Mitnehmers (22) drehfest mit der Welle (10) verbunden ist.

Soll die Ventilklappe geschlossen werden, wird die Antriebswelle (10) gedreht. Die Ventilklappe (3) und die Ringscheibe (4) werden dann gemeinsam mit der Antriebswelle (10) gedreht, bis die Ringscheibe (4) gemäß der Darstellung der Figur 2 auf einen gehäuseseitigen Anschlag (31) trifft, der eine Position der Ventilklappe (3) senkrecht zur Durchflußachse (28) bestimmt. Bei weiterer Drehung der Antriebswelle (10) ist die Ringscheibe (4) auf dem Anschlag (31) gehäusefest abgestützt, so daß nunmehr die weitere Drehbewegung der Antriebswelle (10) die Selbsthemmung des Getriebes überwindet. Durch die Kopplung von Mitnehmer (22) und Klappenansatz (23) tritt dann eine axiale Verschiebung der Ventilklappe (3) relativ zur Ringscheibe (4) auf. Dabei werden die Rückstellfedern (29) zusammengedrückt. Durch diese Bewegung in Richtung der Druchflußachse (28) wird die Ventilklappe (3) schließlich entsprechend Figur 4 einem gehäuseseitigen Sitz (32) aufgelegt. Das Schneckengetriebe (20) und der Hebelarm zwischen Welle (10) und Klappenansatz (23) ermöglicht hohe Andruckkräfte. Im Ausführungsbeispiel nach den Figuren 1 bis 4 sind die Dichtflächen (33, 34) des gehäuseseitigen Sitzes (32) und der Ventilklappe (3) konisch bzw. keglig ausgeführt. Die Ventilklappe (3) weist eine zusätzliche Ringdichtung (35) auf. Das selbsthemmende Schneckengetriebe (20) sorgt dafür, daß stets eine ausreichende Andruckkraft auf den Dichtflächen (33, 34) wirksam ist. In der vollendeten Schließstellung nach Figur 4 bleibt die Ringscheibe (4) am Umfang von dem rückwärtigen Führungsflansch (7) der Ventilklappe (3) umfaßt, weil dessen Tiefe größer als der maximale axiale Verstellweg der Ventilklappe (3) gewählt ist.

Wird die Welle (10) in Gegenrichtung gedreht, so wird zunächst die Ventilklappe (3) axial gelüftet und dann zurückgezogen, bis sie sich der Ringscheibe (4) anlegt. Dies bewirken die Rückstellfedern (29). Die Gesamtanordnung wird in die Offenstellung nach Figur 3 oder eine beliebige Zwischenstellung geschwenkt.

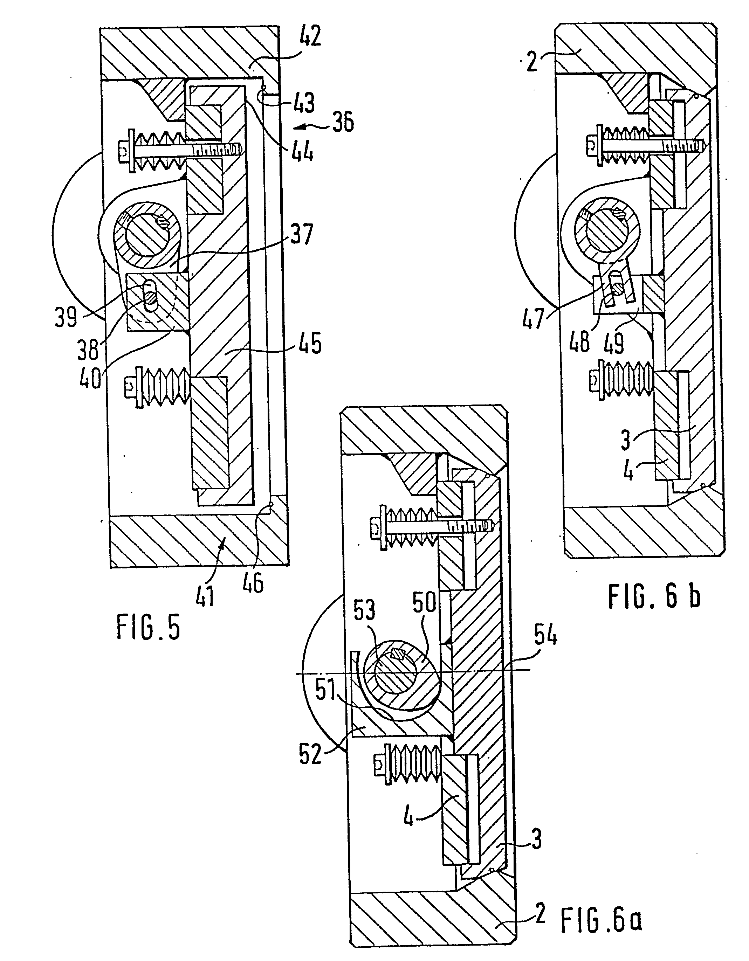

Figur 5 zeigt ein anderes Ausführungsbeispiel, in dem das Absperrorgan (36) mit seinen wesentlichen Teilen identisch mit dem Ausführungsbeispiel nach den Figuren 1 bis 4 aufgebaut ist. Bei dem Absperrorgan (36) ist jedoch der Mitnehmer als Hebel (37) ausgebildet, der mit einem Zapfen (38) in ein Querlangloch (39) des Klappenansatzes (40) eingreift. Außerdem weist der Sitz (41) des Gehäuses (42) eine stirnseitige, ebene Dichtfläche (43) auf, der sich eine ebenfalls stirnseitige Dichtfläche (44) der Absperrklappe (45) anlegt. Der Vorteil dieser Ausführungsform liegt darin, daß zwischen den beiden Dichtflächen (43, 44) keine gleitende Reibung und damit praktisch keine Abnutzungserscheinungen auftreten. Eine Ringdichtung (46), welche in die gehäuseseitige Dichtfläche (43) eingelassen sein kann, weist dann eine erhöhte Standzeit auf.

In der Darstellung nach Figur 66 entsprechen die Ventilklappe (3) und die Ringscheibe (4) dem Ausführungsbeispiel nach Figur 2. Der Mitnehmer ist jedoch eine Gabel (47), in welche ein Zapfen (48) des Klappenansatzes (49) eingreift.

Figur 6a zeigt einen Mitnehmer, der als Exzenternocken (50) ausgebildet ist. Er greift mit Spiel in eine Ausnehmemulde (51) des Klappenansatzes (52) ein. Die Antriebswelle (53) kann in diesem Fall auf der Höhe der Durchflußachse bzw. des Klappenmittelpunktes (54) liegen, so daß sich günstige Verhältnisse in der Kraftübertragung ergeben.

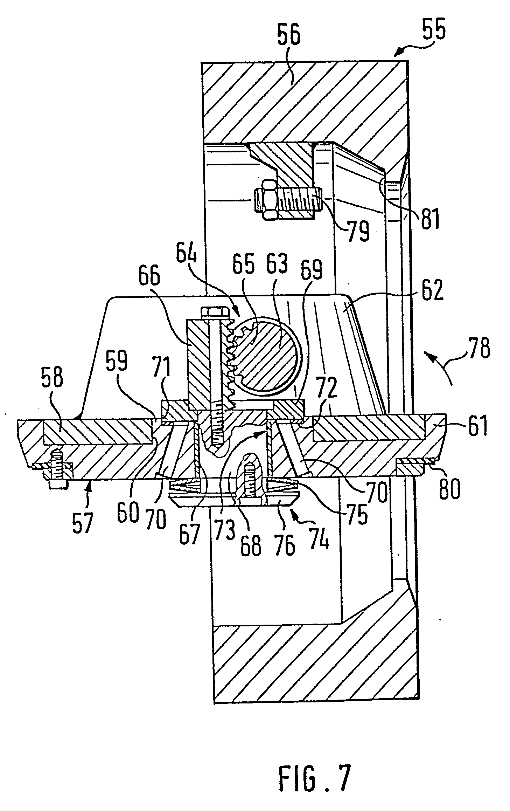

Die Figuren 7 bis 11 zeigen ein in beiden Richtungen gegen Mediumdruck abdichtendes Absperrorgan (55) gemäß der Erfindung mit einem rohrförmigen Gehäuse (56) und mit einer Ventilklappe (57), welche auf einer Ringscheibe (58) axial verschiebbar gelagert ist, so daß beide Teile eine zusammen verschwenkbare Gesamtanordnung bilden. Die gegenseitige Führung erfolgt dabei über einen zentralen, zylindrischen Ansatz (59) der Ventilklappe (57), der in die mittige Öffnung (60) der Ringscheibe (58) eingreift und über einen rückwärtigen Führungsflansch (61) der Klappe (57), welcher die Ringscheibe (58) am Umfang umschließt. Die Ringscheibe (58) sitzt mit zwei rückwärtig vorstehenden Loslagern (62) - in den Zeichnungen ist jedoch ein Loslager (62) ersichtlich -drehbar auf der Antriebswelle (63), welche das Gehäuse (56) quer durchsetzt.

Der Absperrorgan (55) weist einen Antrieb (64) für die Axialverschiebung der Ventilklappe (57) relativ zur Ringscheibe (58) auf. Der Antrieb besteht aus einem an der Antriebswelle (63) angebrachten Mitnehmer in Form eines Ritzels (65), das mit einem Klappenansatz (66) von der Gestalt einer Zahnstange in Eingriff steht. Die den Klappenansatz (66) bildende Zahnstange ist an ein gesondertes, in einem zentralen Durchbruch (67) der Klappe (57) begrenzt verschiebbares Schließstück (68) angeschraubt, welches an seiner Rückseite, d.h. auf der Seite der Zahnstange einen Ventilteller (69) trägt, welcher die rückwärtigen Kanalmündungen mehrerer, die Ventilklappe (57) durchsetzender Kanäle (70) überdeckt. Der Ventilteller (69) liegt teilweise an einer erweiterten Bohrung (71) des Ansatzes (59) der Ventilklappe (57). Zwischen dem Ventilteller (69) und dem Boden dieser erweiterten Bohrung (71) ist eine Dichtscheibe (72) angeordnet, die im Bereich der Kanalmündungen mit Druchbrüchen versehen ist.

Die Kanäle (70) - vorzugsweise sind acht, gleichmäßig über den Umfang auf einem Teilkreis verteilte Kanäle (70) vorgesehen - umschließen den Durchbruch (67) konzentrisch und sind zum rückwärtigen Ende hin konvergierend geneigt, so daß ihre rückwärtigen Mündungen unter dem verhältnismäßig klein dimensionierten Ventilteller (69) zusammenlaufen.

Der zentrale Durchbruch der Ventilklappe (57) ist mit einer Führungshülse (73) für das Schließstück (68) ausgekleidet. Das Schließstück (68) trägt an seinem vorderen Ende eine Rückstellfederanordnung (74), zwischen der und dem Schließkragen (69) die Ventilklappe (57) eingefaßt ist.

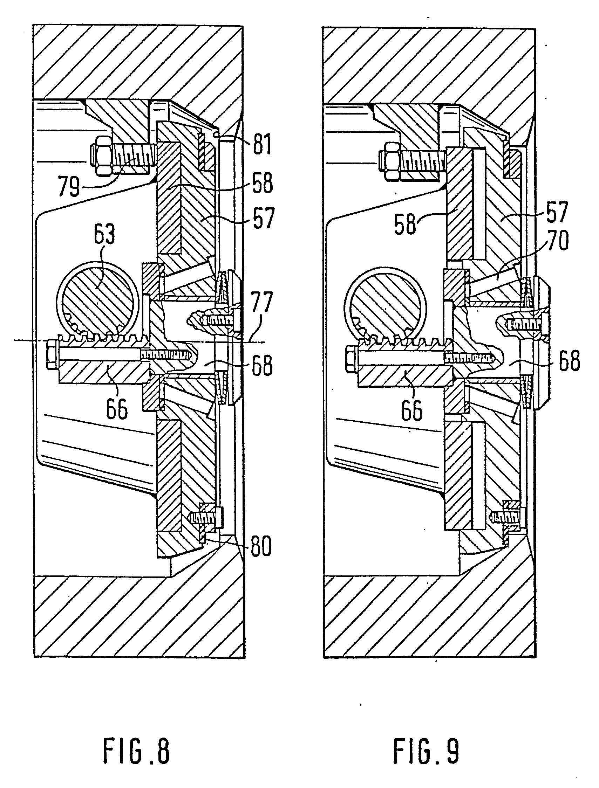

Die Rückstellfederanordnung (74) besteht aus einem Tellerfederpaket (75), das zwischen der Ventilklappe (57) und einer am Schließstück (68) angeschraubten Widerlagerplatte (76) eingespannt ist. Wie aus der Darstellung der Figur 8 zu entnehmen ist, liegt die Verzahnung des Klappenansatzes (66) koaxial zur zentralen Achse (77) des Schließstückes (68) und zugleich auch mit der zentralen Achse des gesamten Absperrorganes (55).

Die Wirkungsweise des in den Figuren 7 bis 11 beschriebenen Absperrorganes ist die folgende: Zum Schließen wird die Welle (63) in Figur 7 entgegen dem Uhrzeigersinn gedreht, wobei zunächst die gesamte von der Welle (63) getragene Anordnung in Richtung des Pfeiles (78) hängt, bis die Ringscheibe (58) auf einen oberen, gehäusefesten, jedoch justierbaren Anschlag (79) trifft. Bei weiterer Drehung der Welle (73) im Gegenuhrzeigersinn bleibt die Ringscheibe (58) stehen, während die Zahnstange (66) axial vorgeschoben wird und hierbei das Schließstück (67) mit der Ventilklappe (57) so weit axial vorschiebt, bis die Dichtfläche (80) der Absperrklappe (57) auf der Gegendichtfläche (81) im Gehäuse (56) aufsitzt.

Bei Drucklosigkeit - oder wenn der Mediumdruck die Vorderseite (in Figur 9 die rechte Seite) der Ventilklappe (57) beaufschlagt -, durchläuft das Absperrorgan beim Öffnen und in umgekehrter Reihenfolge die Stellung nach Figur 8 zur voll offenen Stellung nach Figur 7.

Wird dagegen in der Stellung nach Figur 9 die Ventilklappe (57) durch einen hohen Mediumdruck auf den Ventilsitz gedrückt, so wirken bei einem Öffnen der Ventilklappe (57) die Kanäle (70) in Verbindung mit dem Schließstück (68) als Hilfsventil, das zunächst öffnet und eine Druckentlastung bewirkt, ehe die Ventilklappe (57) selbst vom Ventilsitz abgehoben wird.

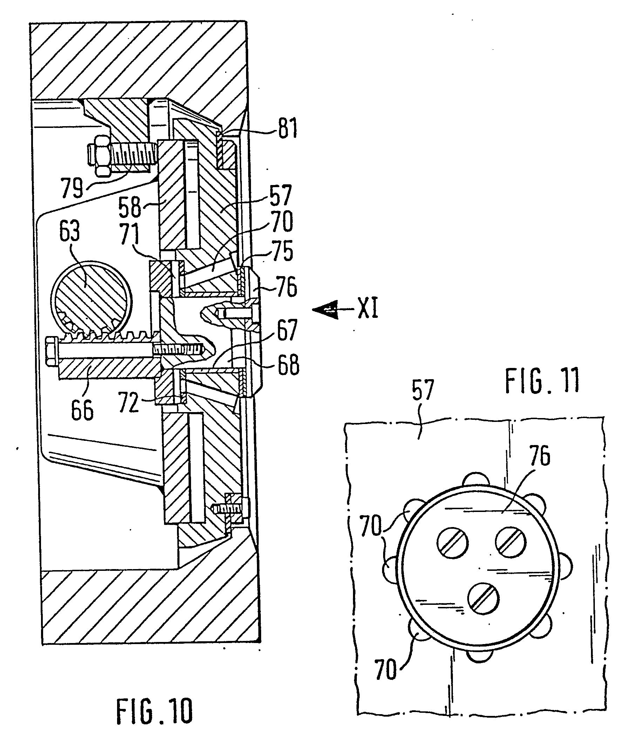

Wird zu Beginn eines Öffnungsvorganges in der Stellung gemäß Figur 9 die Welle (63) im Uhrzeigersinn gedreht, so zieht die Zahnstange das Schließstück (68) unter Zusammenpressen des Tellerfederpaketes (75) von der Ventilklappe (57) zurück, wobei sich der Ventilteller (69) von den rückwärtigen Mündungen der Kanäle (70) abhebt und nunmehr eine Entlastungsströmung freigibt, die um den Ventilteller (69) herum durch die erweiterte Bohrung (71), durch die Durchbrechungen der Dichtscheibe (72) und durch die Kanäle (70) verläuft. Die Figur 10 zeigt die Ventilklappe in einer Stellung, in der das Hilfsventil gerade geöffnet hat. Sobald die Druckdifferenz zu beiden Seiten der Absperrklappe (57) ausreichend gering geworden ist, führt das Tellerfederpaket (75) die Ventilklappe in eine Stellung gemäß Figur 8, aus der heraus dann das Absperrorgan wieder in die vorher geöffnete Stellung nach Figur 7 geschwenkt werden kann.

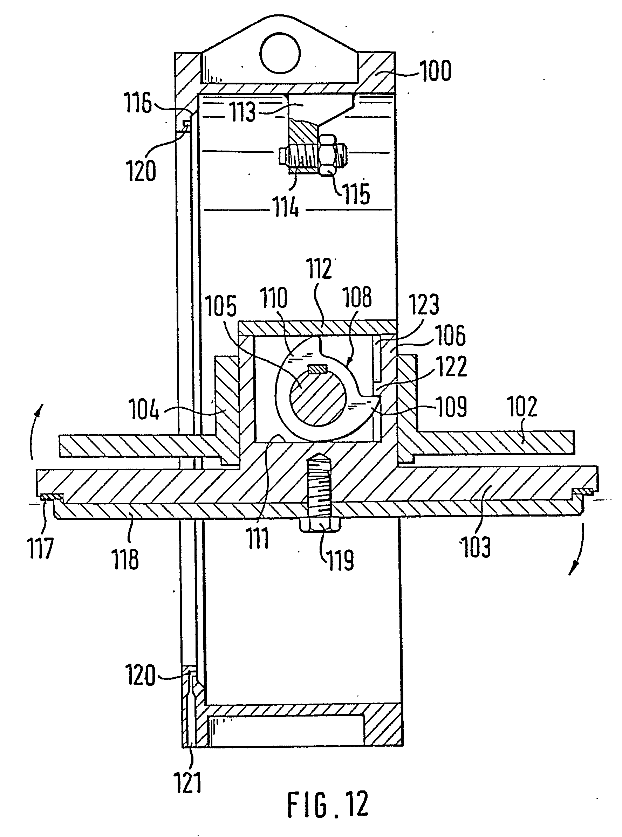

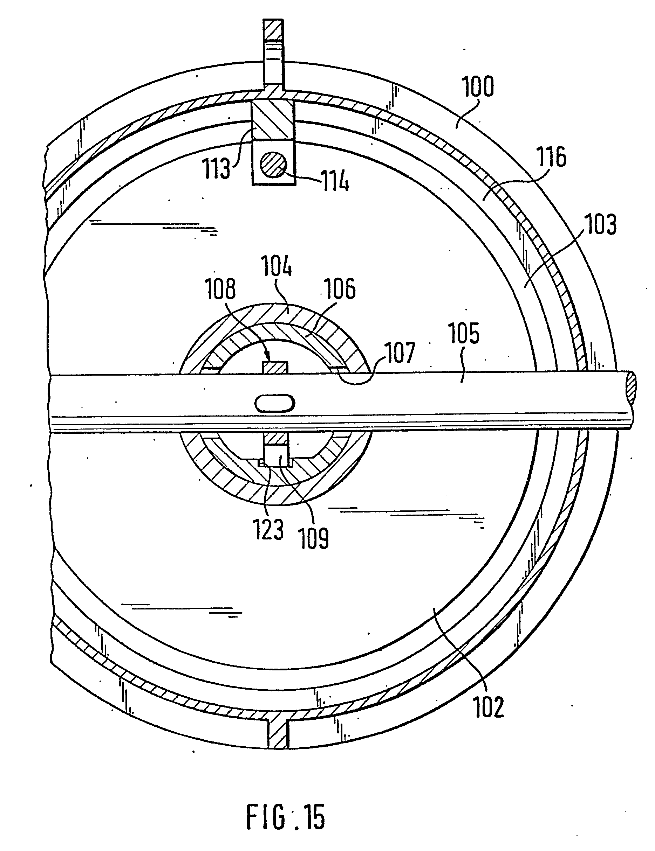

Die Figuren 12 bis 19 veranschaulichen den Aufbau eines Klappenventils für Rohrleitungen gemäß der Erfindung. Das rohrförmige Gehäuse (100), in welchem die Ringscheibe (102) und die Ventilklappe (103) schwenkbar angeordnet sind, ist aus den Figuren 12 bis 19 ersichtlich. Die Ringscheibe (102) weist einen rückwärtigen, zylindrischen Führungsansatz (104) auf, in welchem sie auf einer das Gehäuse (100) durchsetzenden Antriebswelle (105) drehbar gelagert ist. In den Führungsansatz (104) der Ringscheibe (102) ist ein rückwärtiges, ebenfalls zylindrisches Getriebegehäuse (106) der Ventilklappe (103) translatorisch verschiebbar geführt, welches einen erweiterten Durchbruch (107) für die Antriebswelle (105) aufweist (vgl. Figur 15).

Im Inneren des Getriebegehäuses (106) der Ventilklappe (103) ist ein drehfest mit der Antriebswelle (105) verbundener Nocken (108) eingeschlossen, welcher zwei um 180° gegeneinander versetzte Nockenerhebungen (109 und 110) mit gegenläufig ansteigenden Exzenterkurven aufweist. Die steilen Flanken der beiden Nocken (109 und 110) weisen einen Winkelabstand von 90° auf. Der eine Nocken (109) liegt dabei ständig an der klappenseitigen Begrenzungswand (111) des Getriebegehäuses (106) an, während der andere Nocken (110) ständig mit einem Deckel (112) in Kontakt ist, welcher das Getriebegehäuse (106) an seiner Rückseite abschließt.

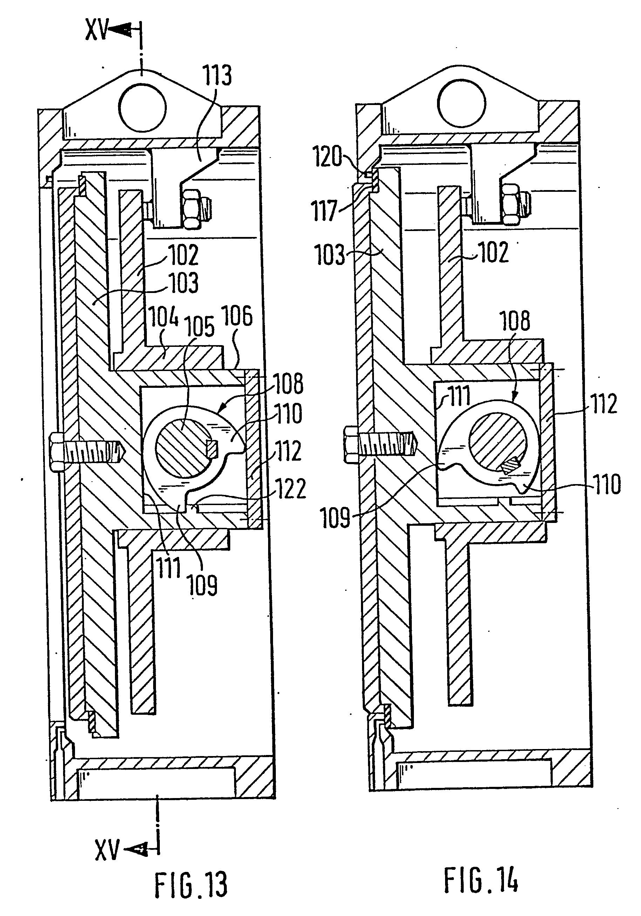

Die Figur 12 zeigt die Ventilklappe in vollständig geöffneter Stellung, bei welcher die Ringscheibe (102) und die Ventilklappe (103) um etwa 90° gegenüber dem Gehäuse (100) verschwenkt sind. Wird die Antriebswelle (105) im Uhrzeigersinn gedreht, so wird über den Nocken (108) ein Reitdrehmoment auf das Getriebegehäuse (106) der Ventilklappe (103) übertragen, wodurch die Ventilklappe (103) und die Ringscheibe (102) gemeinsam in eine Vor-Absperrstellung gemäß Figur 13 schwenken. Diese Schwenkbewegung wird durch einen auf die Rückseite der Ringscheibe (102) auftreffenden, gehäusefesten Anschlag (113) begrenzt, wobei die genaue Anschlagstellung durch eine Stellschraube (114) mit Kontermutter (115) justierbar ist.

Bei Weiterdrehung der Antriebswelle (105) drückt der Nocken (109) mit ansteigender Exzenterkurve auf die klappenseitige Begrenzungswand (111), wodurch die Ventilklappe (103) relativ zur Ringscheibe (102) in Richtung auf einen Ventilsitz (116) des Gehäuses (100) translatorisch verschoben wird. Die Exzenterkurve des rückwärtigen Nockens (110) hat bei einer Drehung im Uhrzeigersinn dagegen abfallende Tendenz, so daß der Nocken (110) zwar stets dem Deckel (112) anliegt, die translatorische Bewegung aber nicht behindert.

Aufgrund der translatorischen Bewegung erreicht die Ventilklappe (103) schließlich eine vollständige Absperrstellung gemäß der Darstellung der Figur 14, wobei sie sich mit einem umlaufenden Dichtring (117) am gehäuseseitigen Ventilsitz (116) abstützt. Um eine genaue Positionierung und gleichzeitig eine leichte Auswechselbarkeit des Dichtringes (117) zu erreichen, ist dieser durch eine gesonderte Halterungsscheibe (118) festgelegt, die mit einer Schraube (119) an der Klappe (103) befestigt ist.

Die Ventilklappe (103) kann jederzeit durch Drehen der Antriebswelle (105) im Gegenuhrzeigersinn wieder vom Ventilsitz (116) abgehoben werden. Um nach längerer, z.B. mehrwöchiger Schließstellung des Absperrorganes ein Ablösen des Dichtringes (117) vom Ventilsitz zu erleichtern, weist der Ventilsitz (116) eine Ringnut (120) auf, welche über eine Bohrung (121) mit einem Druckmedium beaufschlagbar ist. Die translatorische Öffnungsbewegung der Klappe (103) wird durch den Nocken (110) bewirkt, welcher mit nunmehr ansteigender Tendenz auf den rückwärtigen Deckel (112) drückt. Bei erneutem Erreichen der Vor-Absperrstellung gemäß Figur 13 trifft der klappenseitige Nocken (109) auf einen Anschlag (122), welcher als Vorsprung innerhalb einer Nut (123) des Getriebegehäuses (106) ausgebildet ist. Durch die Anlage des Nockens (109) am Anschlag (122) wird eine gemeinsame Drehbewegung der Klappe (103) und der Führung (102) eingeleitet, bis schließlich die vollständig geöffnete Schwenkstellung nach Figur 12 erreicht wird.

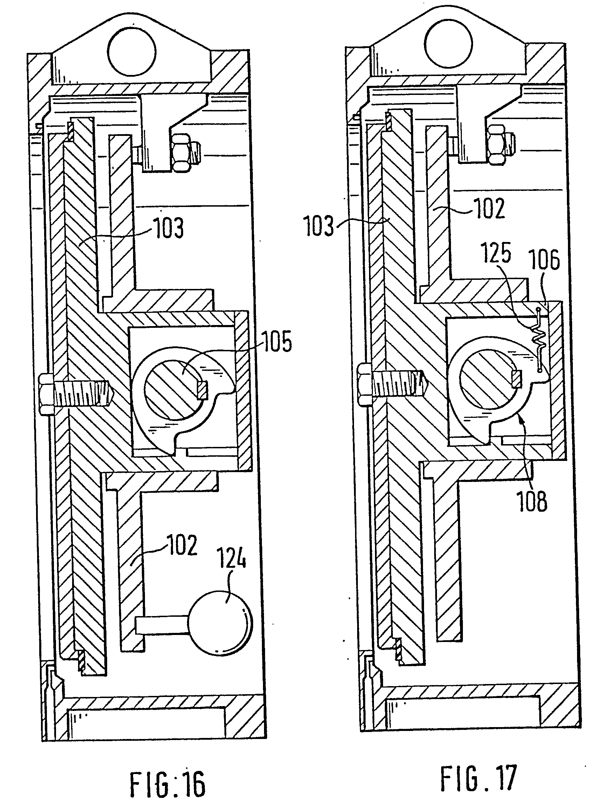

Um ein Rückschwenken der Ventilklappe (103) und der Ringscheibe (102) auf der vollständig geöffneten Stellung nach Figur 12 zu erleichtern, können die Teile in Schließrichtung durch einen Kraftspeicher belastet sein. Gemäß der Darstellung der Figur 16 ist der Kraftspeicher ein Gewicht (124), welches in der gezeigten Vor-Absperrstellung unterhalb und gleichzeitig rückwärtig neben der die Schwenkachse definierenden Antriebswelle (105) liegt. Das Gewicht (124) kann dabei mit der Führungsscheibe (102) oder aber mit der Klappe (103) verbunden sein.

Gemäß der Darstellung der Figur 17 ist der Kraftspeicher eine Zugfeder (125), die zwischen dem Nocken (108) und dem Klappenanschlaggehäuse (106) eingespannt ist.

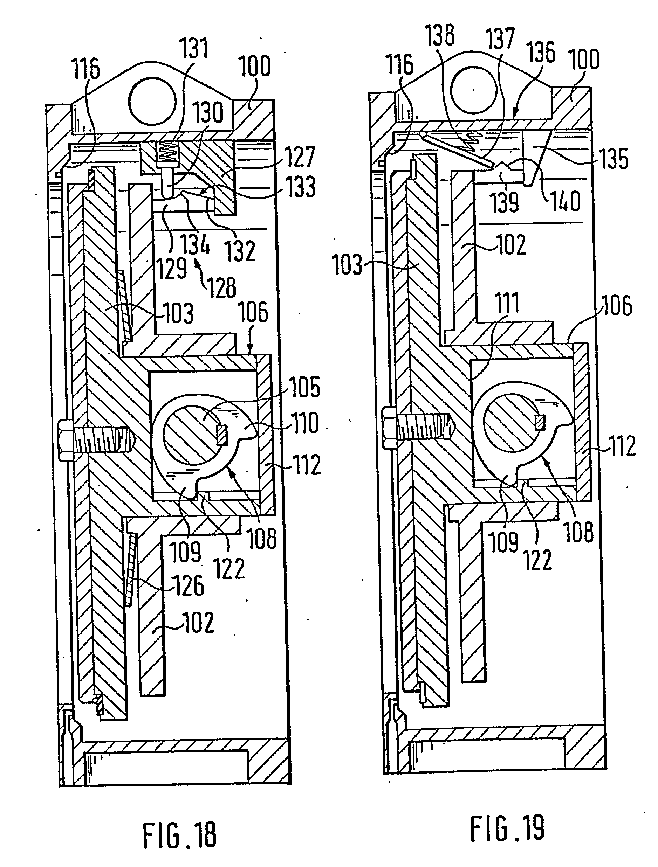

Figur 18 zeigt eine Ausführungsform des erfindungsgemäßen Absperrorgans, bei welchem zwischen Ventilklappe (103) und der Ringscheibe (102) eine Tellerfeder (126) angeordnet ist. Diese drückt den Nocken (110) des Nockens (108) ständig an den Deckel (112), so daß in dieser Stellung erhöhte Reibkräfte auftreten. Deswegen wird in jedem Fall ein ausreichendes Rückdrehmoment aus einer geöffneten Schwenkstellung entsprechend der Darstellung der Figur 12 erreicht. In einer vollständig geschlossenen Stellung gemäß der Darstellung der Figur 14 sind dagegen die Reibkräfte zwischen dem Nocken und dem Deckel (112) geringer, weil die Tellerfeder (126) weitgehend entlastet ist.

Um aber in jedem Fall auszuschließen, daß die Ventilklappe (103) beim Zurückziehen vom gehäuseseitigen Ventilsitz (116) im Gegenuhrzeigersinn schwenkt, weist das Gehäuse (100) einen Anschlag (127) mit einer Rastvorrichtung (128) und eine Ringscheibe (102) auf. Die Rastvorrichtung (128) besteht aus einem rückwärtig von der Ringscheibe (102) vorstehenden Ansatz (129), an welchem in Querrichtung ein im Gehäuse gelagerter Stift (130) durch die Kraft einer vorgespannten Feder (131) angedrückt ist. Erreicht die Ringscheibe (102) beim Schließen die Vor-Absperrstellung, so trifft der Stift (130) zunächst auf eine flache Anstiegflanke (132) eines Vorsprunges (133), welcher auf dem Ansatz (129) angeordnet ist. Bei Erreichen der vollständigen Anschlagstellung rastet der Stift (130) hinter dem Vorsprung (133) ein. Ein Verschwenken mit der Ringscheibe (102) und damit mit der Ventilklappe (103) in Gegenrichtung ist erschwert, da dann der Stift (130) den Widerstand einer steilen Anstiegflanke (134) des Vorsprunges (133) zu überwinden hat. Ein Zurückschwenken ist daher erst möglich, wenn der Nocken (109) des Nockens (108) auf den zugeordneten Drehanschlag (122) trifft.

Figur 19 zeigt einer weitere Ausführungsform eines erfindungsgemäßen Absperrorganes, bei welchem der Nocken (108) durch den Deckel (112) spielfrei im Gehäuse (106) leicht eingeklemmt ist, so daß relativ hohe Reibkräfte für ein Öffnen und Schließen des Klappenventiles wirksam werden. Beim Abheben vom Ventilsitz (116) wird ein Verschwenken der Ventilklappe (103) und der Ringscheibe (102) dadurch verhindert, daß das Gehäuse (100) einen Anschlag (135) mit zugeordneter Rastvorrichtung (136) aufweist. Die Rastvorrichtung (136) besteht aus einem Schwenkhebel (137), welcher durch eine Druckfeder (138) quer zu einem Ansatz (139) der Ringscheibe (102) belastet ist. Der Ansatz (139) drückt beim Einrasten den Schwenkhebel (137) in Querrichtung zur Seite, während er beim Ausrasten nahezu in dessen Achsrichtung eingreift. Somit ist abermals ein erhöhter Ausrastwiderstand gegeben.

In den Figuren 18 und 19 sind die Rastvorrichtungen (128 und 136) lediglich schematisch dargestellt.

Die Übersichtlichkeit halber sind in den Figuren 12 bis 19 das Gehäuse (100), die Ringscheibe (102) sowie die Ventilklappe (103) als einstückige Bauteile dargestellt. In der Praxis kann eine jeweils mehrteilige Schweißkonstruktion vorteilhaft sein.

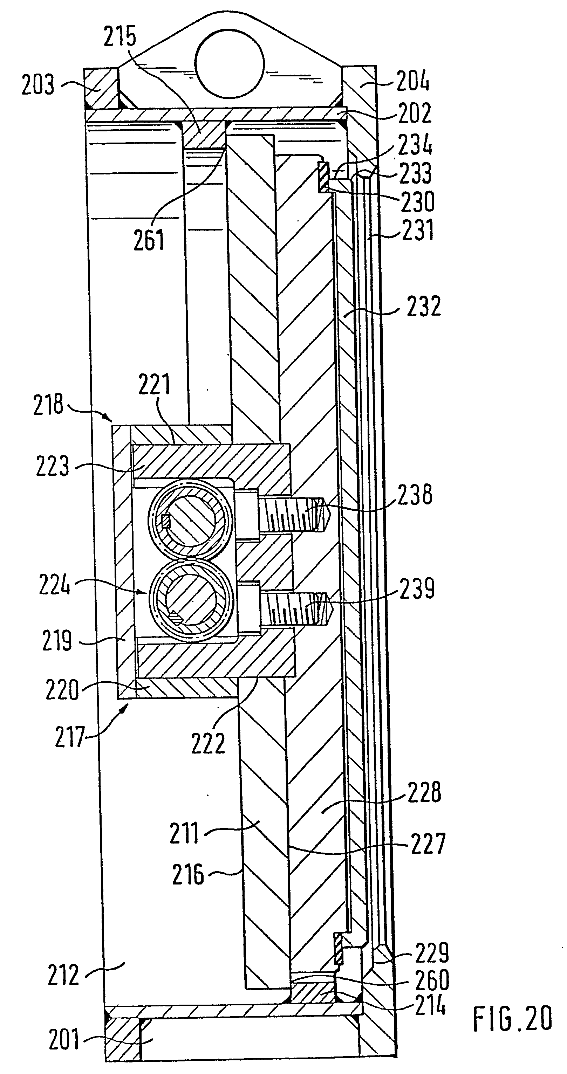

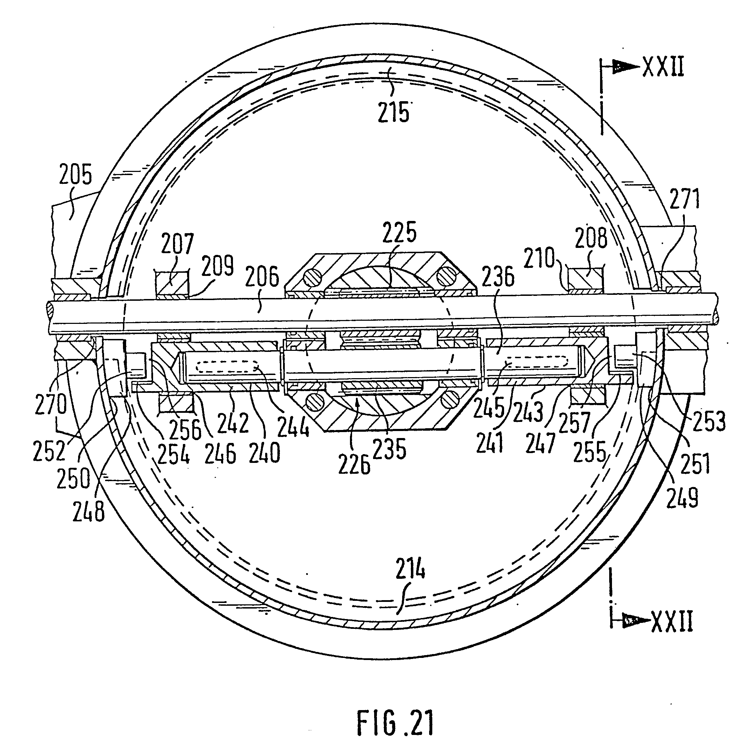

In den Figuren 20 bis 24 ist das Absperrorgangehäuse mit (201) bezeichnet und nur teilweise wiedergegeben. Es hat einen rohrförmigen Gehäuseteil (202) und Flanschen (203 bzw. 204), mit denen es ohne Umlenkung der Strömung in eine Rohrstrecke zwischen zwei Rohre eingebaut werden kann. Der gabelförmige Hals (205) des Gehäuses (201) ist in Figur 21 abgebrochen wiedergegeben. Er kann das Gegenlager für ein Handrad oder einen motorischen Antrieb der Antriebswelle (206) bilden.

Auf der Antriebswelle ist mit Hilfe von zwei Loslagern (207 bzw. 208), in denen Lagerbüchsen (209 bzw. 210) liegen, eine Ringscheibe (211) angeordnet. Für diese ist im Innenraum (212) des Gehäuses ein aus zwei Anschlagleisten (214 und 215) bestehender fester Anschlag vorgesehen. Die Rückseite (216) der Ringscheibe (211) trägt eine Führung (217). Sie besteht aus einem Außengehäuse (218), das seinerseits in einem mehrfach verschraubten Gehäusedeckel (219) und einteiligen Gehäusewänden (220) gebildet wird. Die Innenflächen (221) der Gehäusewände (220), sowie eine Aussparung (222) der Ringscheibe dienen zur Führung der Außenfläche eines Getriebegehäuses (223). Das Gehäuse umschließt ein Koppelgetriebe (224). In dem Koppelgetriebe befindet sich ein mit diesem kämmendes Schubglied (226).

Das Getriebegehäuse (223) sitzt an der Rückseite (227) einer Ventilklappe (228). Für diese ist ein Ventilklappensitz (229) im Gehäuse vorgesehen, mit dem eine Dichtung (230) zusammenwirkt, welche aus einem hitzebeständigen und chemisch inerten Werkstoff besteht. In die Öffnung (231) des Sitzes (229) paßt eine Scheibe (232), welche mit der Ventilklappe (228) verbunden ist. Die nach vorn und innen konvergierende Randfläche (233) der Scheibe (232) dient zum Einspuren der Scheibe (232), während die ausgedehnte Axialfläche (234) zur Reinigung der Sitzöffnung von anhaftenden Verunreinigungen verwendet wird.

Gegenüber dem aus den beiden je einer Seite zur eingeschwenkten Ringscheibe (211) zugeordneten, jedoch um einen Halbbogen gegeneinander versetzten Halbringen (214, 215) bestehenden, gehäusefesten Scheibenanschlag ist der Sitz (220) der Ventilklappe (228) in deren Schließrichtung axial versetzt im Gehäuse angeordnet.

Die Ventilklappe (228) wird mit der Ringscheibe (211) in der eingeschwenkten Stellung der Teile nach Figur 20, in der die Ringscheibe (211) und die Ventilklappe mit ihren Ebenen im Gehäusequerschnitt angeordnet sind, durch die Selbsthemmung des Koppelgetriebes (224) zusammengehalten. Diese kommt zwischen dem Ritzel (225) und einem zum Schubglied (226) gehörenden Verschieberitzel (235) zustande, welches drehfest auf einer Koppelachse (236) sitzt. Die beiden Ritzel sitzen im Inneren des Getriebegehäuses (223), das mit der Ventilklappe, wie bei (238 und 239) in Figur 20 dargestellt, mehrfach verschraubt ist, wobei die Schraubenbohrungen blind enden und an der Rückseite (227) der Ventilklappe angebracht sind. Die Koppelachse (236) ist mit beiden Enden (240 und 241) in je einer Verschiebehülse (242, 243), wie bei (244 und 245) in Figur 21 dargestellt, verkeilt. Die Hülsen (242, 243) bewegen sich daher zusammen mit der Koppelachse (236). Sie übertragen diese Bewegung auf zwei an den Enden der Koppelachse angeordnete Lagerhülsen (246, 247), welche in den Lagerbetten (207 und 208) der Ringscheibe laufen, jedoch auf die Ventilklappe (228) wirken.

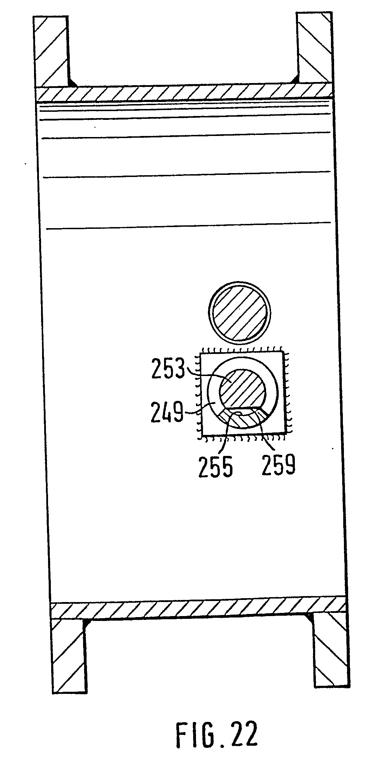

Parallel zur Antriebswelle (206) und auf gegenüberliegenden Seiten des Gehäuses ragen Zapfen (248, 249) einer gehäusefesten Axialführung in den Gehäuseinnenraum. Die Zapfen sitzen in Gehäusebohrungen und sind im Inneren des Gehäuses mit Kehlnähten (250, 251) hart geschweißt. Jede Zapfen trägt eine Bewegungsbahn an einem abgeflachten Bolzen (252, 253) mit dem er eine Baueinheit bildet. Diese Gleitbahnen sind Kulissensteinen (254, 255) zugeordnet, die an der Ventilklappe (228), nämlich an den Enden der Verschiebehülsen (242, 243) in L-förmigen Aussparungen (256, 257) ausgebildet sind. Wie sich aus der Darstellung der Figur 22 und am Beispiel des Rundbolzens (249) ergibt, ist die jedem Kulissenstein zugeordnete Gleitbahn (259) exzentrisch angeordnet.

Wie sich aus der Darstellung der Figur 21 ergibt, ist der gehäusefeste Anschlag (215) ein Halbring aus Flachstahl, ebenso wie der gehäusefeste Anschlag (214), auf dem sich die gegenüberliegende Seite der Ringscheibe (211) abstützt. Die beiden Halbringe enden neben der Gehäuseaussparung (270, 271) für die Antriebswelle (206).

Im Betrieb wird mit Hilfe des Antriebes die Antriebswelle (206) gedreht, bis die beiden zusammengehaltenen Hauptbaugruppen, d.h. die Ringscheibe (211) und die Ventilklappe (228) ihre aus Figur 20 ersichtliche Stellung erreicht haben. Sobald die Ränder (260, 261) der Ringscheibe (211) den Anschlägen 214, 215 anliegen, führt die Weiterdrehung der Antriebswelle (206) dazu, daß die die Kulissensteine bildenden, vorderen Enden (254, 255) der Hülsen unter die Abflachungen (259) geschwenkt sind, die die Gleitbahnen (252, 253) bilden. Die Weiterdrehung der Antriebswelle (206) führt infolge der eintretenden Abstützung des Drehmomentes an den Kulissensteinen (254, 255) und den Gleitbahnen (252, 253) dazu, daß jede Drehbewegung der Hülsen (242, 243) ausgeschlossen ist. Infolgedessen verschiebt die Achse (236) nunmehr über die Hülsen (246, 247) die Ventilklappe (228) axial. Die Verschiebebewegung hört auf, sobald die Dichtung auf den Ventilsitz (229) gepreßt worden ist. Da hierzu nur ein geringer, axialer Bewegungsbetrag erforderlich ist, geraten die Ritzel (225 und 235) während der axialen Bewegung nicht außer Eingriff.

Wenn das Ventil geöffnet werden soll, wird die Antriebswelle (206) im Uhrzeigersinn angetrieben. Infolge der Verriegelung der Ventilklappe (228) in der beschriebenen Axialführung wird zunächst das Schubglied durch die Bewegung des Ritzels (235) zusammen mit der Koppelachse zurückgeholt, bis die Kulissensteine das Ende der Abflachung (259) bzw. der Bewegungsbahnen (252, 253) erreicht haben. Dadurch wird die Drehbewegung freigegeben. Infolgedessen schwenken bei Weiterdrehung der Antriebswelle (206) die nunmehr aufeinander liegende Ringscheibe (211) und die Ventilklappe (228) zusammen im Uhrzeigersinn um ca. 90° und geben den Strömungsquerschnitt frei.

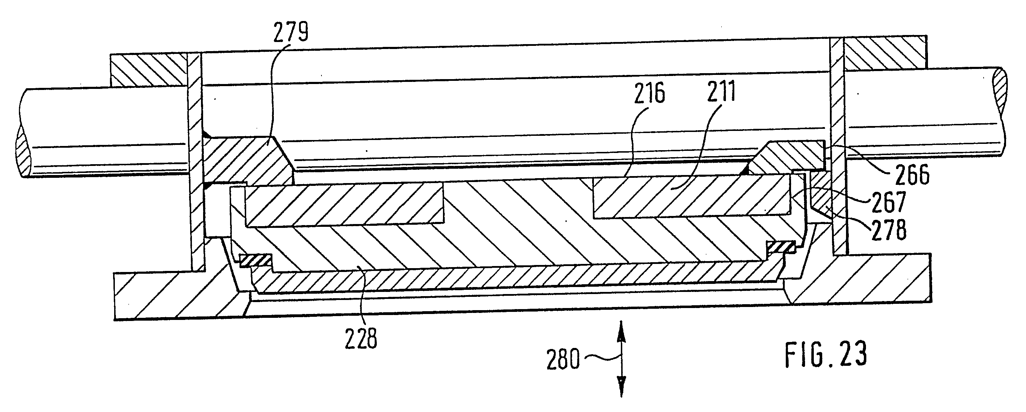

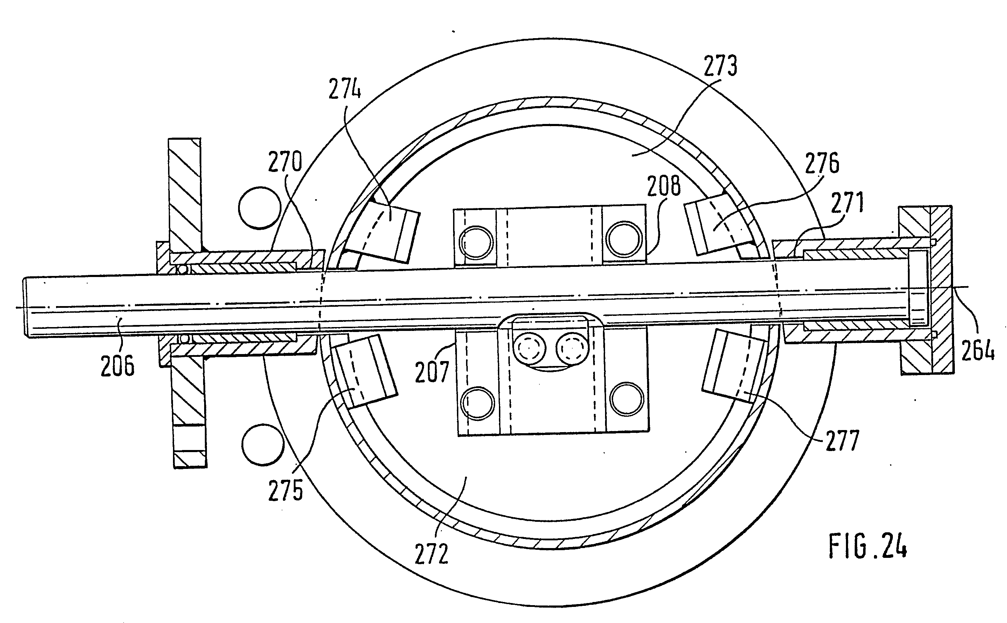

Die Ausführungsform nach den Figuren 23 und 24 unterscheidet sich von der Ausführungsform nach den Figuren 20 bis 22 zunächst durch eine abweichende Ausbildung der Anschläge, auf denen sich die Ringscheibe je nach Belastungsrichtung abstützt. Gemäß der Darstellung der Figur 24 weist die mit den beiden Loslagern (207 und 208) auf der Antriebswelle (206) sitzende Ringscheibe (211) je ein Segment (272, 273) auf, die jedoch eine Baueinheit bilden. Jedes dieser Segmente liegt an einer Seite der Wellenmitte (264). Unmittelbar neben den Achsaussparungen (270, 271) befinden sich die Anschlagpaare, d.h. die Anschläge (274, 275) liegen neben den Achsaussparungen (270) und auf je einer Seite der Antriebswelle, aber unmittelbar neben den Achsaussparungen (271). Die Anschläge (275 und 277) sind auf der der Ventilklappe (228) (Figur 23) abgewandten Seite (216) der Ringscheibe (211) befestigt, stützen sich aber mit Auskragungen (266) über den Ringscheibenrand (267) auf den gehäusefesten Anschlägen (278) ab. Die Anschläge (274 und 276) sind dagen an dem Gehäuse befestigt und unterstützen mit Auskragungen (279) die Rückseite der Ringscheibe (211).

Gegenüber der Ausführungsform nach den Figuren 20 bis 22, in der die Zuordnung der Anschläge zu der Antriebswelle und zu deren Gehäuseaussparungen die gleiche ist, ergibt sich bei der Ausführungsform nach den Figuren 23 und 24 der Vorteil, daß die Ansammlung von Verschmutzungen im Gehäuse verhindert wird, die bei Halbringen auftreten könnten. Die Anschläge wirken im übrigen in beiden Richtungen des Durchflusses, die mit dem Pfeil (280) angedeutet sind. Eine Axialführung im Ausführungsbeispiel nach den Figuren 20 bis 22 ist im Ausführungsbeispiel nach den Figuren 23 und 24 nicht gezeichnet, aber ebenfalls vorgesehen.

Nicht dargestellt ist eine Ausführungsform des erfindungsgemäßen Absperrorgans, bei der anstelle einer Dichtung ein Metallsitz verwendet wird. Anstelle der Dichtung (230) ist dann eine dachförmige Schneide vorgesehen, welche mit ihrem Firstgrat auf die Fläche (229) des Ventilsitzes wirkt. Dadurch werden Verschmutzungen abgesprengt und ein dichter Sitz erreicht.

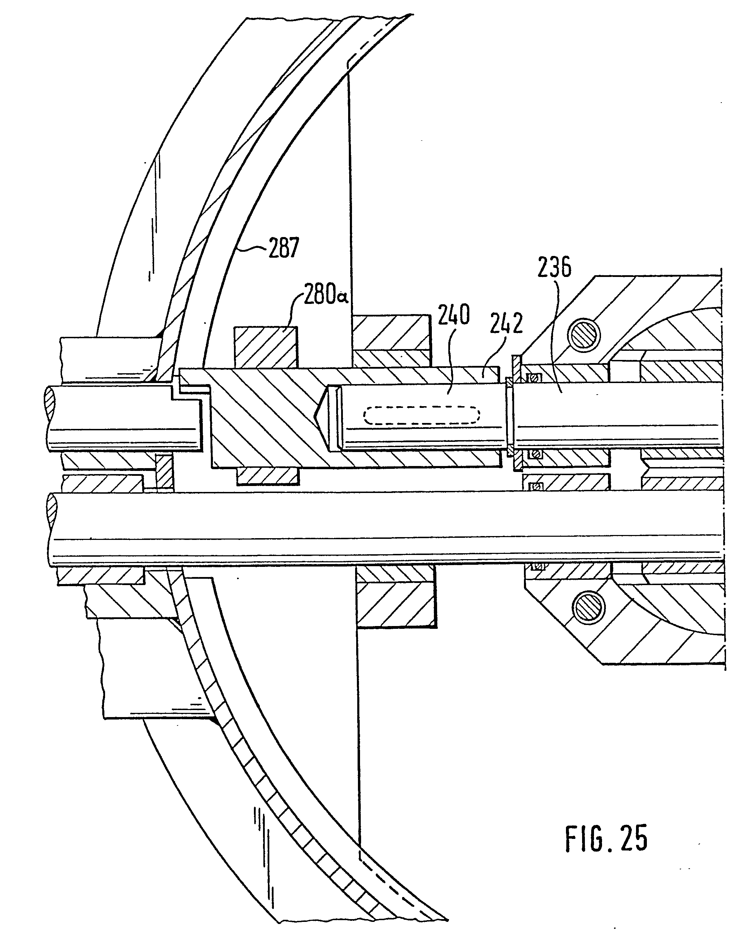

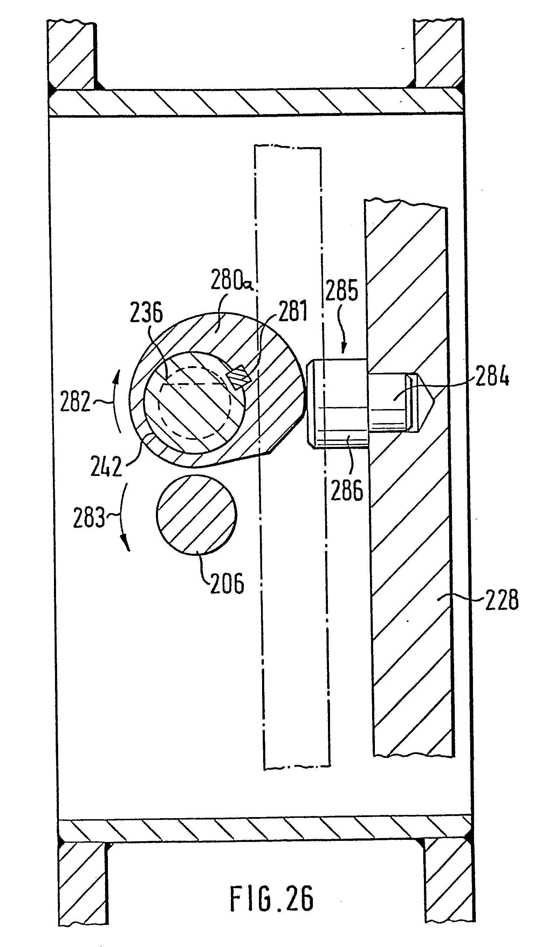

Bei den Ausführungsformen nach den Figuren 25 und 26 sitzen auf beiden Verschiebehülsen, von denen jedoch nur die Verschiebehülse (242) dargestellt ist, je ein Nocken, der für die Verschiebehülse (242) und das dieser zugeordnete Ende (240) der Koppelachse (236) bei (280a) wiedergegeben ist. Der Nocken (280a) ist mit der Verschiebehülse (242) drehfest durch einen Keil (281) verbunden. Der nicht dargestellte zweite Nocken ist deckungsgleich mit dem Nocken (280a) und ebenso wie dieser angebracht, so daß beide Nocken bei Drehung der Antriebswelle (206) in Richtung des Pfeiles (283) über die mit Schrauben (284) verwirklichten Anschläge (285) die Ventilklappe (228) axial aus der strichpunktiert in Figur 26 dargestellten Vor-Absperrstellung in die in ausgezogenen Linien wiedergegebene Absperrstellung treiben bzw. den Weg für das Zurückziehen der Ventilklappe (228) freigeben. Die Schraubenköpfe (286) sind vorher genau eingestellt, so daß die Nocken (280a) annähernd gleiche Kräfte übernehmen und das Getriebe ganz oder zum Teil entlasten.

Die Nocken sind wie am Beispiel des Nockens (280a) in Figure 25 dargestellt, unmittelbar neben dem Klappenrand (287) angeordnet, so daß sich unter Einbeziehung des Getriebes eine dreifache Klappenabstützung auf der Klappenrückseite ergibt.

Nicht dargestellt ist eine Ausführungsart des Absperrorganes, bei der die Klappenwelle über ihr Ritzel mit einem doppelt verzahnten Klappenansatz kämmt, der mit seiner gegenüberliegenden Verzahnung mit einem drehfest auf der Koppelwelle befestigten Zahnrad kämmt, wenn die Klappe vorgeschoben oder zurückgezogen werden soll.

**Patentansprüche**

1. Absperrorgan mit einem in eine Rohrleitung einbaubaren Rohrgehäuse und einer Drehklappe, für die eine das Gehäuse durchsetzende Antriebswelle und ein Sitz im Gehäuse vorgesehen ist, wobei auf der Antriebswelle (10) eine Ringscheibe (11) mit Loslagern (7, 8) angeordnet und die Ventilklappe (3) in der Ringscheibe (4) geführt, sowie mit der Antriebswelle durch ein Getriebe (22, 23) verbunden ist, welches beim Einschwenken der Ventilklappe (3) gehemmt ist und zum Anpressen der Ventilklappe (3) auf ihren Sitz (32) dient, wobei das Getriebe (22, 23) bei Rückdrehung der Antriebswelle (10) die Ventilklappe (3) axial vom Sitz (2) abhebt, bis diese auf der Ringscheibe (4) abgestützt ist und das Getriebe (22, 23) die Verbindung der Ventilklappe (3) mit der Antriebswelle bildet, wobei sich die Ventilklappe (3) auf der Ringscheibe (11) abstützt, welche einen rückwärtigen, als Antrieb des Getriebes (22, 23) dienenden Klappenansatz aufnimmt, dadurch gekennzeichnet, daß der Klappenansatz (66) mit einem Ventilteller (69) eines Hilfsventils verbunden ist und ein in einem zentralen Durchbruch (67) der Ventilklappe (57) begrenzt verschiebbares Schließstück (68) aufweist, und daß die Ventilklappe (57) einen oder mehrere sie durchsetzende Kanäle (70) aufweist, deren rückwärtige Kanalmündungen den Ventilteller überdeckt, der mit der Antriebswelle (63) mit der Ventilklappe (57) verspannbar ist.

2. Absperrorgan nach Anspruch 1, dadurch gekennzeichnet, daß das Schließstück (68) an seinem vorderen Ende auf einer Rückstellfeder (74) abgestützt ist und die Klappe (57) von der Rückstellfeder (74) und dem Ventilteller (69) eingefaßt ist.

3. Absperrorgan nach Anspruch 2, dadurch gekennzeichnet, daß die Rückstellfeder (74) ein zwischen der Klappe (57) und einer am Schließstück (68) angeschraub ten Widerlagerplatte (76) eingespanntes Tellerfederpaket (75) ist.

4. Absperrorgan nach einem der Ansprüche 1 bis 3, dadurch gekennzeichnet, daß die Kanäle (70) in der Ventilklappe (57) auf einem Kranz angeordnet sind, welcher den Klappendurchbruch (67) konzentrisch umschließt, und daß die Kanäle (70) zum rückwärtigen Ende hin konvergieren.

5. Absperrorgan nach einem der Ansprüche 1 bis 4, dadurch gekennzeichnet, daß der Antrieb (23) des Getriebes (22, 23) mit einem radialen Mitnehmer (22) der Antriebswelle (10) gekoppelt ist, wobei der Mitnehmer (22) als Ritzel und der Klappenansatz (23) als Zahnstange ausgebildet sind und die Zahnstangenverzahnung für das Ritzel mit der zentralen Achse (77) des Schließstückes (68) fluchtet.

6. Absperrorgan nach einem der Ansprüche 1 bis 5, dadurch gekennzeichnet, daß der Ventilteller (69) in einer erweiterten Bohrung (71) der Klappe (57) teilweise aufgenommen und mit einer Dichtscheibe (72) unterlegt ist, welche im Bereich der Kanalmündungen durchbrochen ist.

7. Absperrorgan nach einem der Ansprüche 1 bis 6, dadurch gekennzeichnet, daß der zentrale Durchbruch (67) der Klappe (57) mit einer Führungshülse (73) für das Schließstück (68) ausgekleidet ist.

FIG.1

EP 0 320 490 A2

EP 0 320 490 A2

FIG. 2

FIG. 3

FIG. 4

FIG.5

FIG. 6 b

FIG.6a

FIG. 7

FIG.8

FIG.9

FIG.10

FIG.11

FIG. 12

EP 0 320 490 A2

FIG.13    FIG.14

FIG. 15

FIG.16

FIG.17

FIG.18

FIG.19

FIG.20

EP 0 320 490 A2

FIG.21

FIG.22

FIG.23

EP 0 320 490 A2

FIG.24

EP 0 320 490 A2

FIG. 25

FIG.26